# EUROPEAN PATENT APPLICATION

(11) **EP 4 546 645 A1**
(43) Date of publication of application: **30.04.2025**
(21) Application number: 23315398.0
(22) Date of filing: 24.10.2023
(51) Int. Cl.: H02S 50/00

(54) **IMPROVED METHOD FOR DELIVERING DOMESTIC ELECTRICITY TO A PUBLIC GRID**

(71) Applicant: TotalEnergies OneTech, 92078 Paris La Defense Cedex (FR)
(72) Inventor: Drahi, Etienne, 92078 PARIS LA DEFENSE CEDEX (FR); Cordier, Philippe, 92078 PARIS LA DEFENSE CEDEX (FR)
(74) Representative: Innovincia

(57) **Abstract**

The present invention relates to a method for producing energy, comprising steps for providing a set of photovoltaic panels, providing a tracking system for the photovoltaic panels, and, running the tracking system to manage the set of panels in order to reduce the amount of energy injected into the grid, so as to ensure grid protection.

## Description

The present invention relates to the field of photovoltaic panels.

Solar photovoltaic tracking has been developed for decades in order to maximize the power output of photovoltaic devices and systems. Two main approaches have been applied:
i) use the calculated sun position using the geographical location of the photovoltaic system to calculate the orientation of the photovoltaic system to best face the sun,
ii) use a Maximum Power Point Tracking algorithm (several algorithms can be used) which is communicating continuously (timescale can vary) to the tracker motor to adjust the modules position in order to maximize power output.

Lately, the first approach (i), probably the most spread, has seen its limits due to rise of bifacial modules and systems, especially in clouding conditions. Nevertheless, in this case the optimization is still based on increasing the power output and therefore the produced energy.

New photovoltaic applications such as agrivoltaics is now gaining interest and some academic researchers, research institutes and companies are also mentioning synergies between photovoltaic and crops/plants yields adding another degree of complexity for the photovoltaic panels orientation.

One goal of the invention is to propose an optimized method to inject the maximum possible energy into the grid, while optimizing the amount of light received by the plants to which the panels serve as protection.

According to the invention, such a method comprises steps for providing a set of photovoltaic panels with a tracking system for the photovoltaic panels, and, running said tracking system to manage said set of panels according to data, in order to reduce the amount of energy injected into the grid, so as to ensure grid protection.

The data can be derived from production and/or consumption forecasts of the grid. It can be provided by a managing system for the grid, when a risk of grid overload is detected by this system managing the grid.

So as to manage the set of panels, part or the whole of the panels can be oriented to receive less sunlight; they can also be moved to be shaded, for example to overlap one another, in whole or in part, so that less area of the panels is exposed to sunlight.

This method avoids an overload of the grid which would require the panels to be disconnected from the grid. The panels can be damaged by successive unexpected interruptions; a production decrease according to the method allows to keep the panels connected to the grid, without damaging them, while protecting the grid from an overload.

When data indicate that the grid is no longer in risk of being overloaded, the tracking system is managed to increase the amount of energy injected into the grid in order to optimize said energy production.

Advantageously, panels are further oriented according to collected data among: i) energy output, ii) power output, iii) agronomical yield, iv) soil regeneration, v) water consumption, vi) water evaporation, grid protection having the strongest priority.

Preferably, energy production or agronomic yield or water consumption having the lowest priority.

The priority order may evolve over time during the year, depending on the elapsed weather conditions that may affect, power output, agronomical yield, soil regeneration, water consumption, water evaporation.
a method according to the invention may be applicable to any type of tracked photovoltaic system, i.e., a land-based, floating or agrivoltaic photovoltaic system.

The method may use, as input data:
- the instantaneous photovoltaic production power, for example DC/AC data from inverters, micro-inverters, optimizers;
- weather forecast data, measured and/or modeled;
- electrical grid information, for example power demand and production data and forecast;
- any potential sensor data, for example among: sky imager, albedometer, pyranometer, thermocouple, agronomical data and/or modeled data.

Quick deployment of renewable energy is also attracting attention due to the renewable energy maximum to allow grid safe operation: balance between consumed and generated power, frequency control. Renewable energy is often indicated as intermittent power sources which cannot be dispatched. Nonetheless, using tracking systems, photovoltaic modules can be oriented in a way that power output will be strongly reduced to avoid curtailment or overproduction. This is especially true with c-Si based modules which have a strong difference in absorption between direct and diffuse lights.

The invention ensures grid stability and protection, and avoids penalties or fines that may be due to overproduction could be allowed. Also, it improves plant yield, reduce water consumption or evaporation. Altogether with some priority rules taking into account these several other metrics, it allows producing the maximum energy. Those priority rules will evolve over time to take into account the elapsed weather conditions, over a time horizon that has significant impact on plant yield, water consumption, soil regeneration, typically six months to one year.

Of course, the invention is not limited to the examples just described. On the contrary, the invention is defined by the following claims.

It will indeed appear to the person skilled in the art that various modifications can be made to the above-described embodiments in light of the teaching just disclosed.

The invention allows to ensure grid stability and protection, improve plant yield, reduce water consumption or evaporation, altogether with some priority rules while producing the maximum energy taking into account these other data. Those priority rules will evolve over time to take into account the elapsed weather conditions, over a time horizon that has significant impact on plant yield, water consumption, soil regeneration; typically, six months to one year.

The primary purpose of the invention is to protect a grid. The invention can therefore be applied to cases other than the production of agrivoltaic electricity; therefore, the invention is not limited to the production of agrivoltaic electricity.

## Claims

1. A method for producing energy, comprising the following steps:
- providing a set of photovoltaic panels;
- providing a tracking system for the photovoltaic panels; and,
- running said tracking system to manage said set of panels according to data, in order to reduce the amount of energy injected into a grid, so as to ensure said grid protection.

2. Method according to claim 1, wherein some of the data is derived from production and/or consumption forecasts of the grid.

3. Method according to claim 1 or 2, wherein some of the data is provided by a managing system for the grid, when a risk of grid overload is detected by said system managing the grid.

4. Method according to claim 1 to 3, wherein the step for managing the set of panels, comprises orienting part or the whole of the panels so as to receive less sunlight;

5. Method according to claim 1 to 4, wherein the step for managing the set of panels, comprises moving part or the whole of the panels so as to be shaded.

6. Method according to claim 5, wherein the shading of the panel comprises making a least some of the panels overlap one another, in whole or in part, so that less area of the panels is exposed to sunlight.

7. Method according to claim 1 to 4, comprising a further step wherein the tracking system is managed to increase the amount of energy injected into the grid, when data indicate that the grid is no longer in risk of being overloaded.
